# EUROPEAN PATENT APPLICATION

(11) **EP 3 498 769 A1**
(43) Date of publication of application: **19.06.2019**
(21) Application number: 17207976.6
(22) Date of filing: 18.12.2017
(51) Int. Cl.: C08K 3/22, C08K 3/04

(54) **PRODUCT MANUFACTURED WITH A COMPOSITE MATERIAL**

(71) Applicant: Gozzini, Palmiro Giuseppe, 25030 Pompiano (Brescia) (IT); Rossi, Marco, 21052 Busto Arsizio (Varese) (IT); Ligato, Alessio, 25019 Sirmione (Brescia) (IT)
(72) Inventor: Gozzini, Palmiro Giuseppe, 25030 Pompiano (Brescia) (IT); Rossi, Marco, 21052 Busto Arsizio (Varese) (IT); Ligato, Alessio, 25019 Sirmione (Brescia) (IT)
(74) Representative: Biggi, Cristina

(57) **Abstract**

The present invention relates to a product for bathrooms or kitchens manufactured with composite material comprising a polymer matrix, preferably an acrylic resin, mixed with at least one filler dispersed in the polymer matrix.

## Description

The present invention relates to a product manufactured with a composite material for furnishing bathrooms and kitchens wherein the composite material comprises an acrylic polymer and one or more fillers.

### PRIOR ART

Products for furnishing bathrooms and kitchens are used very often over the day and therefore must be made of materials that fulfil certain requirements.

A first requirement regards the mechanical strength of said products. In fact, they are subjected to loads, for example in case of suspended fixtures or bathtubs. Additionally, said products must display good resistance to scratches and impacts.

Furthermore, fixtures and products for furnishing kitchens must be resistant to acids, strong detergents and hydrochloric compounds; in fact, it is not rare to see fixtures with damaged, opaque and/or corroded surfaces due to the continuous wear and tear to which they are subjected on a daily basis.

Additionally, said products must be comprised of smooth and easy-to-clean surfaces that comply with hygiene standards.

Fixtures, and in general products for kitchens and bathrooms, are now mainly manufactured with ceramic materials.

The basic ingredients for manufacturing ceramic are raw materials found in nature: kaolinite, clay, feldspar and quartz sand.

Said ingredients are mixed until a paste is obtained which is then poured into moulds. The products thus obtained are then dried, vitrified and finally fired in a furnace at temperatures up to 1240°C.

Ceramic fixtures display good resistance to loading and to chemical agents in general. However, ceramic is often subject to chipping problems which can compromise not only the aesthetics but also the stability of the fixture. Note that ceramic fixtures are often chipped even before being installed, e.g. during transport or while the fixture itself is being placed.

There are also metal, glass and natural stone products for kitchens and bathrooms. Although said materials display very captivating aesthetic characteristics, they are unlikely to reach the necessary requirements for daily and long-lasting use.

It is therefore still current and necessary to find new materials suitable for manufacturing products for bathrooms and kitchens, particularly fixtures, that display excellent resistance to loading, to the corrosion of chemical agents and to chipping.

On this point, the applicant has surprisingly found that a composite material comprising a polymer matrix mixed with at least one filler dispersed in the polymer matrix allows a product to be obtained with high mechanical strength, making it an excellent candidate for manufacturing high quality fixtures.

Furthermore, the product according to the invention displays excellent fireproof capacity and resistance to the main reagents and/or elements of daily use that could be spilled on the product itself. The composite material used to obtain the product according to the invention can be easily processed in a similar way to wood and, as well as being very resistant to chipping, in the event of scratches such marks can be easily removed by sandpapering.

### SUMMARY OF THE INVENTION

The present invention relates to a product for bathrooms or kitchens manufactured with composite material comprising a polymer matrix, preferably an acrylic polymer, mixed with at least one filler dispersed in the polymer matrix.

In particular, the acrylic polymer is a methacrylic polymer, preferably a methyl methacrylic polymer. Preferably, the at least one filler is selected from carbon nanotubes, fullerene, graphene, alumina, aluminium hydroxide, aluminium silicate and mixtures thereof.

In one embodiment, the composite material according to the present invention comprises a polymer matrix of methyl methacrylic polymer mixed with aluminium hydroxide and/or fullerene.

The invention further relates to a method for preparing a composite material comprising a step of mixing at least one filler with a polymer matrix and a step of preparing a product for bathrooms and kitchens, in particular a bathroom fixture.

The products obtained display high mechanical and thermal resistance, and resistance to impacts, to scratches and to cuts.

Said products can be manufactured with imperceivable junctions that make the surfaces very hygienic in that they do not facilitate the growth of bacteria or fungi. Furthermore, the composite material is inert, non-toxic and non-porous.

### DETAILED DESCRIPTION OF THE INVENTION

A first aspect of the present invention relates to a product manufactured with composite material for furnishing bathrooms and kitchens. Such product is preferably a product for furnishing bathrooms, e.g. a wash basin, bidet, toilet (WC), shower tray, urinal, bathtub, or a product for furnishing a kitchen, e.g. a sink, a worktop and a hob.

The composite material comprises a polymer matrix, preferably acrylic resin, mixed with at least one filler dispersed inside the polymer matrix.

In a preferred embodiment of the present invention, the acrylic polymer is a methacrylic polymer, preferably a methyl methacrylate.

The acrylic polymer is present in the composite material in a percentage generally comprised between 10 and 60 wt%, preferably between 20 and 50 wt%, even more preferably between 30 and 40 wt%.

The at least one filler is selected from: graphite, carbon nanotubes, fullerene, graphene, silica, mica, talc, clay, kaolin, wollastonite, calcium carbonate, calcium hydroxide, calcium metasilicate, zinc oxide, zirconium oxide, titanium oxide, tin oxide, tungsten oxide, lead oxide, nickel oxide, magnesium oxide, copper oxide, barium hydroxide, alumina, aluminium hydroxide, aluminium silicate and mixtures thereof.

Preferably, the at least one filler is selected from: carbon nanotubes, fullerene, graphene, alumina, aluminium hydroxide, aluminium silicate and mixtures thereof.

In one embodiment, the composite material comprises aluminium hydroxide dispersed in the polymer matrix.

In one embodiment, the composite material comprises aluminium hydroxide and fullerene dispersed in the polymer matrix.

The at least one filler is present in mixture in a percentage comprised between 30 and 75 wt%, preferably between 45 and 70 wt%, even more preferably between 55 and 65 wt%.

The composite material further comprises a dye able to change the colour of the product.

Preferably, said dye is selected from: iron oxide, chromium oxide, molybdates, toluidine, ultramarine, prussian blue, phthalocyanine, titanium dioxide, carbon black.

The dye is present in the mixture in a percentage comprised between 0 and 10 wt%, preferably between 0 and 8 wt%, even more preferably between 0 and 6 wt% or between 1 and 4 wt%.

In one embodiment of the invention, the composite material comprises a methacrylic polymer, e.g. methyl methacrylate and aluminium hydroxide.

In one embodiment of the invention, the composite material comprises a methacrylic polymer, e.g. methyl methacrylate and fullerene.

In a second embodiment of the invention, the composite material comprises a methacrylic polymer, e.g. methyl methacrylate, aluminium hydroxide and fullerene.

In a third embodiment of the invention, the composite material comprises a methacrylic polymer, e.g. methyl methacrylate, aluminium hydroxide and a dye.

In a further embodiment of the invention, the composite material comprises a methacrylic polymer, e.g. methyl methacrylate, aluminium hydroxide, fullerene and a dye.

In a preferred embodiment of the invention the composite material comprising a methacrylic polymer, preferably methyl methacrylate, aluminium hydroxide and possibly a dye, is used for manufacturing a fixture, particularly a toilet (WC) and a bidet. The invention therefore relates to a fixture manufactured with composite material comprising a methacrylic polymer, preferably methyl methacrylate, mixed with aluminium hydroxide and possibly a dye. Such fixture is preferably a toilet or a bidet.

In a preferred embodiment of the invention the composite material comprising a methacrylic polymer, preferably methyl methacrylate, aluminium hydroxide, fullerene and possibly a dye is used for manufacturing a bathroom product selected from a wash basin, bidet, toilet (WC), shower tray, urinal, bathtub, or a kitchen product selected from a sink, worktop and hob. The invention therefore relates to a product for bathrooms and kitchens manufactured with composite material comprising a methacrylic polymer, preferably methyl methacrylate, mixed with aluminium hydroxide, fullerene and possibly a dye. Such product for bathrooms is selected from a wash basin, bidet, toilet (WC), shower tray, urinal, bathtub, and such product for kitchens is selected from a sink, a worktop and a hob.

In a preferred embodiment of the invention the composite material comprising a methacrylic polymer, preferably methyl methacrylate, aluminium hydroxide and fullerene is used for manufacturing a product for bathrooms such as a toilet, bidet, bathtub, shower tray and wash basin. The invention therefore relates to a product for bathrooms manufactured with composite material comprising a methacrylic polymer, preferably methyl methacrylate, mixed with aluminium hydroxide and fullerene. Such product for bathrooms is preferably selected from: toilet (WC), bidet, bathtub, shower tray and wash basin.

A second aspect of the present invention relates to a process for achieving a product according to the invention. The process comprises a step of mixing a polymer matrix according to the invention with at least one filler in accordance with the present invention. Other optional components may be added during the mixing step to obtain the composite material and the desired product. For example, dyes may be added.

The mixing of components is performed in a hot state in a low or high speed mixer or in an ultrasound mixer.

The mixture thus obtained is subsequently inserted into a mould having the shape of the product to be obtained and left to solidify through cooling. Alternatively, the hot mixture is subjected to compression or injection moulding to obtain the shape of the desired product.

## Claims

1. A product for bathrooms or kitchens manufactured with a composite material comprising a polymer matrix and at least one filler dispersed in the polymer matrix, wherein the polymer matrix is an acrylic polymer and the at least one filler is selected from the group consisting of: graphite, carbon nanotubes, fullerene, graphene, silica, mica, talc, clay, kaolin, wollastonite, calcium carbonate, calcium hydroxide, calcium metasilicate, zinc oxide, zirconium oxide, titanium oxide, tin oxide, tungsten oxide, lead oxide, nickel oxide, magnesium oxide, copper oxide, barium hydroxide, alumina, aluminium hydroxide, aluminium silicate and mixtures thereof.

2. The product according to claim 1, wherein the acrylic polymer is a methacrylic polymer, preferably a methyl methacrylic polymer.

3. The product according to claim 1 or 2, wherein the at least one filler is selected from:
carbon nanotubes, fullerene, graphene, alumina, aluminium hydroxide, aluminium silicate and mixtures thereof.

4. The product according to any one of claims from 1 to 3, wherein the at least one filler is a mixture of aluminium hydroxide and fullerene.

5. The product according to any one of the preceding claims, where the at least one polymer is present in a percentage comprised between 10 and 60 wt%, preferably between 20 and 50 wt%, even more preferably between 30 and 40 wt%.

6. The product according to any one of the preceding claims, where the at least one filler is present in a percentage comprised between 30 and 75 wt%, preferably between 45 and 70 wt%, even more preferably between 55 and 65 wt%.

7. The product according to any one of the preceding claims, where the composite material comprises at least one dye.

8. The product according to claim 7, where the dye is at least one pigment selected from iron oxide, chromium oxide, molybdates, toluidine, ultramarine, prussian blue, phthalocyanine, titanium dioxide and carbon black.

9. The product according to claim 7 or 8, wherein the dye is present in a percentage comprised between 0 and 10 wt%.

10. The product according to claim 9, wherein the dye is present in a percentage comprised between 0 and 8 wt%.

11. The product according to claim 9 or 10, wherein the dye is present in a percentage comprised between 0 and 6 wt%, preferably between 1 and 4 wt%.

12. The product according to any one of the preceding claims, where the product is a product for bathrooms selected from a wash basin, bidet, toilet (WC), shower tray, urinal, bathtub, or a product for kitchens selected from a sink, a worktop and a hob.

13. The product according to claim 12, wherein said product is manufacture with composite material comprising an acrylic polymer mixed with aluminium hydroxide and fullerene.

14. The product according to any one of claims from 1 to 11, wherein the composite material comprises an acrylic polymer mixed with aluminium hydroxide and the product is a bathroom fixture selected from: toilet (WC) and bidet.
